# EUROPÄISCHE PATENTSCHRIFT

(11) **EP 0 860 321 B1**
(45) Veröffentlichungstag und Bekanntmachung des Hinweises auf die Patenterteilung: **02.10.2002**
(21) Anmeldenummer: 98102957.2
(22) Anmeldetag: 20.02.1998
(51) Int. Cl.: B60Q 1/26

(54) **Leuchte mit einer Befestigungseinrichtung für Fahrzeuge**
Vehicle light with a fixation device
Feu de véhicule avec un dispositif de fixation

(30) Priorität: 24.02.1997 DE 19707094
(43) Veröffentlichungstag der Anmeldung: 26.08.1998
(73) Patentinhaber: Hella KG Hueck & Co., 59552 Lippstadt (DE)
(72) Erfinder: Hamelbeck, Antonius, 59609 Anröchte (DE)

(56) Entgegenhaltungen:
- EP-A- 0 026 402
- EP-A- 0 200 907
- DE-A- 4 238 285
- DE-U- 9 007 203
- FR-A- 2 314 843
- GB-A- 2 093 174

## Beschreibung

Die Erfindung betrifft eine Leuchte mit einer Befestigungsvorrichtung für Fahrzeuge, insbesondere Heckleuchte für Fahrzeuge mit den Merkmale nach dem Oberbegriff des Anspruchs 1.

Eine Leuchte mit einer Befestigungseinrichtung für Fahrzeuge ist aus dem deutschen Gebrauchsmuster 74 07 139 bekannt geworden. Die Leuchte weist ein aus Kunststoff bestehendes Gehäuse auf, dessen Rückseite einen schalenförmigen Reflektor der Leuchte bildet und dessen Vorderseite von einer lichtdurchlässigen Abschlußscheibe abgeschlossen ist. Der Reflektor weist im Scheitelbereich eine Öffnung zur Aufnahme einer Lampe auf. Die Leuchte ist in eine Öffnung des Fahrzeugs eingesetzt und liegt mit einem Federelement, welches eine die Öffnung des Fahrzeugs umgebende Dichtung ist, an dem Rand der Öffnung des Fahrzeugs an. Die Befestigungsansätze weisen am freien Ende eine Rastnase auf und sind annähernd in ihrer gesamten Länge federnd ausgeführt. Die Rastelemente sind in Befestigungsöffnungen des Fahrzeugs eingesteckt und hintergreifen mit ihrer Rastnase selbsttätig einen Randbereich der Befestigungsöffnung. Das von der umlaufenden Dichtung gebildete Federelement wird dabei zusammengedrückt. Die federnden Befestigungsansätze sind um quer zu ihrer Steckrichtung verlaufende Linien in einem elastischen Bereich bewegbar und liegend angrenzend an die Rastnase unter Vorspannung an dem Randbereich der Befestigungsöffnung des Fahrzeugs an. Wegen dieser dauernd wirkenden Federkraft nimmt die Elastizität der Befestigungsansätze mit der Zeit ab und die zwischen den Befestigungsöffnungen des Fahrzeugs und den Befestigungsansätzen bestehende Rastverbindung kann sich im Fahrbetrieb selbsttätig lösen. Außerdem kann sich die Rastverbindung bei einem Wechsel der Lampe selbsttätig lösen.

Aus der EP-A-0 026 402 ist eine Leuchte mit einer Befestigungseinrichtung für Fahrzeuge gemäß dem Oberbegriff von Anspruch 1 bekanntgeworden, welche drei an die Rückseite der Leuchte angeformte Befestigungsansätze aufweist. Zwei der Befestigungsansätze bestehen jeweils aus zwei federnden Laschen, wobei eine der Laschen ein Rastelement ist. Der dritte Befestigungsansatz weist an seinem freien Ende ein federndes Rastelement auf, welches U-förmig gestaltet ist. Die Schenkel des U-förmigen Rastelementes sind federnd ausgeführt und in ihrer gesamten Länge durch die Befestigungsöffnung hindurchgesteckt. Die federnden Schenkel bzw. die federnden Laschen der Befestigungsansätze sind mindestens um eine quer zur Steckrichtung der Leuchte verlaufende Linie in einem elastisch nachgiebigen Bereich bewegbar. Nach einem Verrasten der Rastelemente an den Randbereichen der Befestigungsöffnungen des Fahrzeuges grenzt die Leuchte mit den in Steckrichtung gerichteten Anlageflächen der Befestigungsansätze an den Randbereich der Befestigungsöffnungen des Fahrzeuges an. Hierbei ist es nachteilig, daß die Befestigungsöffnungen des Fahrzeuges so groß ausgeführt sein müssen, daß die federnden Rastelemente beim Hindurchführen durch die Befestigungsöffnungen bis zu ihrem Verrasten seitlich ausweichen können. Bei einer Kraft, welche in Steckrichtung zwischen den Randbereichen und den Rastelementen wirkt, entsteht ein Drehmoment, durch welches sich die Rastverbindung lösen kann. Die in Steckrichtung verlaufende Kraft kann bei einem Wechsel der Lampe oder durch Vibration im Fahrbetrieb auftreten. Um einen sicheren Festsitz der Rastvorrichtung zu erreichen, müßte die Rastvorrichtung mit einer Verriegelungsvorrichtung gekoppelt sein, die die Rastelemente in ihrer verrasteten Lage hält. Eine Verriegelungseinrichtung verteuert die Leuchte und die Montage der Leuchte ist zeitaufwendig und umständlich. Außerdem müssen die Rastelemente, um eine möglichst sichere Rastverbindung zwischen ihnen und dem Fahrzeug zu erhalten, quer zur Steckrichtung federnd an dem Randbereich der Befestigungsöffnung des Fahrzeuges anliegen. Durch Alterung des Materials der federnden Rastelemente können die federnden Eigenschaften der Rastelemente nachlassen.
Der am freien Ende mit dem U-förmigen federnden Rastelement versehene Befestigungsansatz ist zwischen den Befestigungsöffnungen des Fahrzeuges und der Rückseite der Leuchte mindestens um eine quer zur Steckrichtung verlaufende Linie flexibel ausgeführt, um Toleranzen zwischen den Befestigungsansätzen und den Befestigungsöffnungen des Fahrzeuges auszugleichen. Trotz dieser Flexibilität des Befestigungsansatzes verbleibt weiterhin ein mögliches Lösen der Rastverbindungen.

Aufgabe der Erfindung ist es, die im Oberbegriff des Anspruchs 1 beschriebene Befestigungseinrichtung einer Leuchte für Fahrzeuge derart zu gestalten, daß die selbstrastende Verbindung zwischen dem Befestigungsansatz der Leuchte und dem Fahrzeug auch bei einer entgegen der Steckrichtung des Befestigungsansatzes wirkenden großen Kraft, welche bei einem Wechsel der Lampe auftreten kann, sicher gegen ein selbsttätiges Lösen ist und des weiteren der Befestigungsansatz quer zu seiner Steckrichtung nicht unter Vorspannung an einem Randbereich der Befestigungsöffnung anliegen muß, um die Leuchte an dem Fahrzeug zu halten. Diese Aufgabe wird nach der Erfindung durch die Merkmales des kennzeichnenden Teils des Anspruches gelöst. Dadurch liegt das federnde Rastelement nur beim Einstecken in die Befestigungsöffnung des Fahrzeugs unter Vorspannung an einem Randbereich der Befestigungsöffnung an. Würde das federnde Rastelement dauernd an dem Randbereich der Befestigungsöffnung des Fahrzeugs unter Vorspannung anliegen, so läßt die Federwirkung, insbesondere wenn der Befestigungsansatz aus Kunststoff hergestellt ist, mit der Zeit nach. Das Rastelement kann entgegen der Steckrichtung mit einer großen Kraft an dem Randbereich der Befestigungsöffnung des Fahrzeugs anliegen, da das federnde Rastelement um eine in Steckrichtung verlaufende Linie bewegbar ist.

Der Befestigungsansatz kann große Haltekräfte, die zum sicheren Halten der Leuchte an dem Fahrzeug notwendig sind, aufnehmen, wenn er zusammen mit seinem durch die Befestigungsöffnung des Fahrzeugs hindurchsteckbaren Endabschnitt starr ausgeführt ist.

Ein verliersicherer Eingriff des Befestigungsansatzes in die Befestigungsöffnung des Fahrzeugs besteht auch bei zwischen Leuchte und Fahrzeug groben Toleranzen, wenn der Befestigungsansatz zumindest eine in Federrichtung des Rastelements gerichtete Abstützfläche aufweist, mit welcher der Befestigungsansatz bis zum selbsttätigen Eingreifen in den ersten Randbereich der Befestigungsöffnung an einem dem ersten Randbereich zugewanden zweiten Randbereich der Befestigungsöffnung entlanggleitet. Dadurch ist ein Lösen der selbstrastenden Verbindung zwischen dem Befestigungsansatz und dem Fahrzeug nur dann möglich, wenn das Rastelement soweit um die in Steckrichtung verlaufende Linie im elastischen Bereich gedrückt wird, bis das Rastelement durch die Befestigungsöffnung hindurchziehbar ist. Der Befestigungsansatz ist in seiner Steckrichtung besonders sicher in der Befestigungsöffnung des Fahrzeugs arretierbar, wenn er auf sich abgewandten Seiten mindestens jeweils eine in Federrichtung des Rastelements gerichtete Abstützfläche aufweist.

Der Befestigungsansatz ist besonders stabil ausgeführt, wenn mindestens eine Abstützfläche von einer Stirnfläche einer in Steckrichtung des Befestigungsansatzes verlaufenden Versteifungsrippe gebildet ist. Der Befestigungsansatz läßt sich leicht in die Befestigungsöffnung einfädeln und die Rastverbindung ist mit einer geringen Steckkraft herstellbar, wenn das federnde Rastelement von einem Wandabschnitt gebildet ist, welcher einen in und entgegen der Steckrichtung verlaufenden Randabschnitt aufweist, von denen der entgegen der Steckrichtung gerichtete erste Randabschnitt die Befestigungsöffnung selbsttätig hintergreift und der in Steckrichtung gerichtete zweite Randabschnitt als Auflaufschräge dient, mit welcher das Rastelement beim Einstecken des Befestigungsansatzes an einem ersten Randbereich der Befestigungsöffnung entlanggleitet, bis das Rastelement den ersten Randbereich der Befestigungsöffnung selbstrastend hintergreift. Hierbei ist es zweckmäßig, wenn das Rastelement mit seiner Hauptausdehnung in einem spitzen Winkel zur Abstützfläche des Befestigungsansatzes verläuft.

Die Leuchte ist in Steckrichtung des Befestigungsansatzes an dem Fahrzeug arretiert, wenn ein entgegen der Steckrichtung gerichteter Randabschnitt des Rastelements einen in den Befestigungsansatz eingebrachten Schlitz begrenzt, welcher quer zur Steckrichtung verläuft. In diesen Schlitz greift der von dem Rastelement selbsttätig hintergriffene Randbereich der Befestigungsöffnung des Fahrzeugs ein.

Das federnde Rastelement kann entgegen der Steckrichtung mit einer großen Kraft an dem Randbereich der Befestigungsöffnung des Fahrzeugs anliegen, ohne daß durch hohe Kerbwirkung das Rastelement von dem freien Endabschnitt des Befestigungsansatzes abbrechen kann, wenn in den Befestigungsansatz eine augenförmige Öffnung eingebracht ist, welche an das federnde Rastelement angrenzt und zum Schlitz hin geöffnet ist. Hierbei ist es weiterhin zweckmäßig, wenn der Befestigungsansatz mit in einem um die augenförmige Öffnung herum verlaufenden Abschnitt in seiner Wandstärke dicker ausgeführt ist.

Die Leuchte ist in Steckrichtung des Befestigungsansatzes klapperfrei an dem Fahrzeug halterbar, wenn die an das Fahrzeug anliegbare Anlagefläche von einem an die Rückseite der Leuchte angebrachten Federelement gebildet ist, durch welches der entgegen der Steckrichtung gerichtete erste Randabschnitt des Rastelements gegen den selbsttätig hintergriffenen ersten Randbereich der Befestigungsöffnung gedrückt ist. Als Federelement kann eine Dichtung dienen, welche an einem Randbereich einer Öffnung des Fahrzeugs dicht anliegt, durch die hindurch ein Wechsel von Lampen der Leuchte möglich ist.

Die Leuchte ist mit einer großen Kraft in Steckrichtung gegen die Kraft des Federelements bewegbar, wenn in den durch die Befestigungsöffnung hindurchführbaren Endabschnitt mindestens eine Hinterschneidung eingebracht ist, welche zum Eingriff eines Hilfswerkzeuges dient, durch das der Befestigungsansatz entgegen der Federkraft des Federelements in eine mit der Befestigungsöffnung verrastete Endstellung bringbar ist.

Die Leuchte ist auch bei großen im Fahrbetrieb auftretenden vertikalen Kräften sicher an dem Fahrzeug halterbar, wenn an die Rückseite der Leuchte mehrere Befestigungsansätze angeformt sind, von denen zumindestens zwei mit ihren Abstützflächen in sich schneidenden Flächen liegen.

Bei einer vorteilhaften Weiterbildung der Erfindung sind an dem durch die Befestigungsöffnung des Fahrzeugs hindurchsteckbaren Endabschnitt des Befestigungsansatzes mindestens zwei der federnden Rastelemente angeformt.

Hierbei sollten die federnden Rastelemente zu einer in Steckrichtung verlaufenden Mittelebene symmetrisch ausgeführt sein, damit durch in Steckrichtung auf die Rastelemente wirkende Kräfte sich annähernd aufhebende Drehmomente entstehen und somit der Befestigungsansatz nur durch in Steckrichtung verlaufende Kräfte belastet ist.

Zwei Ausführungsbeispiele nach der Erfindung sind in der Zeichnung dargestellt und zwar zeigen
- Figur 1: in einer perspektivischen Ansicht einer Rückseite einer Leuchte für Fahrzeuge mit Befestigungsansätzen, welche selbsttätig mit dem Fahrzeug verbindbar sind;
- Figur 2: eine Ansicht auf die Rückseite der Leuchte;
- Figur 3: einen Schnitt nach der Linie A-A in Figur 2 durch die Leuchte;
- Figur 4: in einer perspektivischen Ansicht eine erste Ausführungsform eines Befestigungsansatzes vor und nach dem Einführen in eine Befestigungsöffnung des Fahrzeugs;
- Figur 5: in einer perspektivischen Ansicht den Befestigungsansatz nach Figur 4 beim Einführen in die Befestigungsöffnung des Fahrzeugs;
- Figur 6: in einer perspektivischen Rückansicht den Befestigungsansatz von Figur 4 und 5;
- Figur 7: in einer perspektivischen Ansicht eine zweite Ausführungsform eines Befestigungsansatzes der Leuchte vor dem Einsetzen in eine Befestigungsöffnung des Fahrzeugs;
- Figur 8: in einer perspektivischen Ansicht den Befestigungsansatz von Figur 8 nach dem selbsttätigen Eingreifen in die Befestigungsöffnung des Fahrzeugs und
- Figur 9: eine Teilansicht entgegen der Steckrichtung des Befestigungsansatzes gesehen auf den in der Befestigungsöffnung des Fahrzeugs selbsttätig festgesetzten Befestigungsansatz.

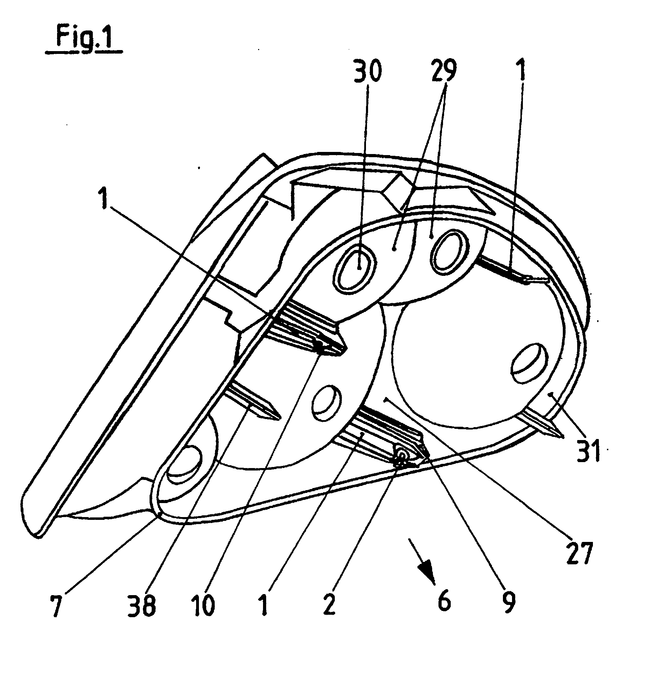

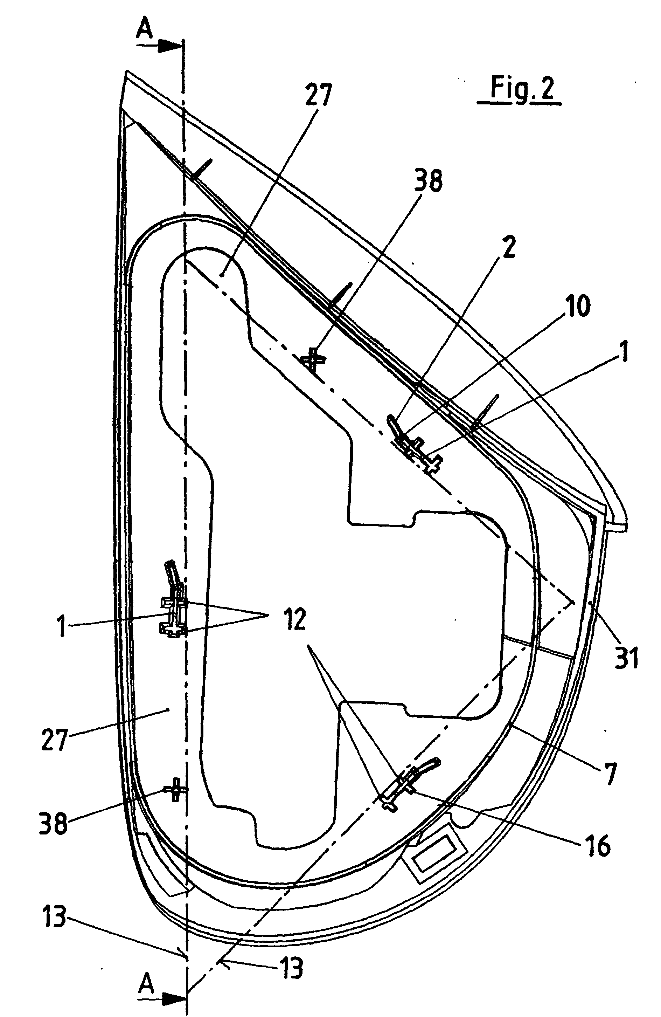

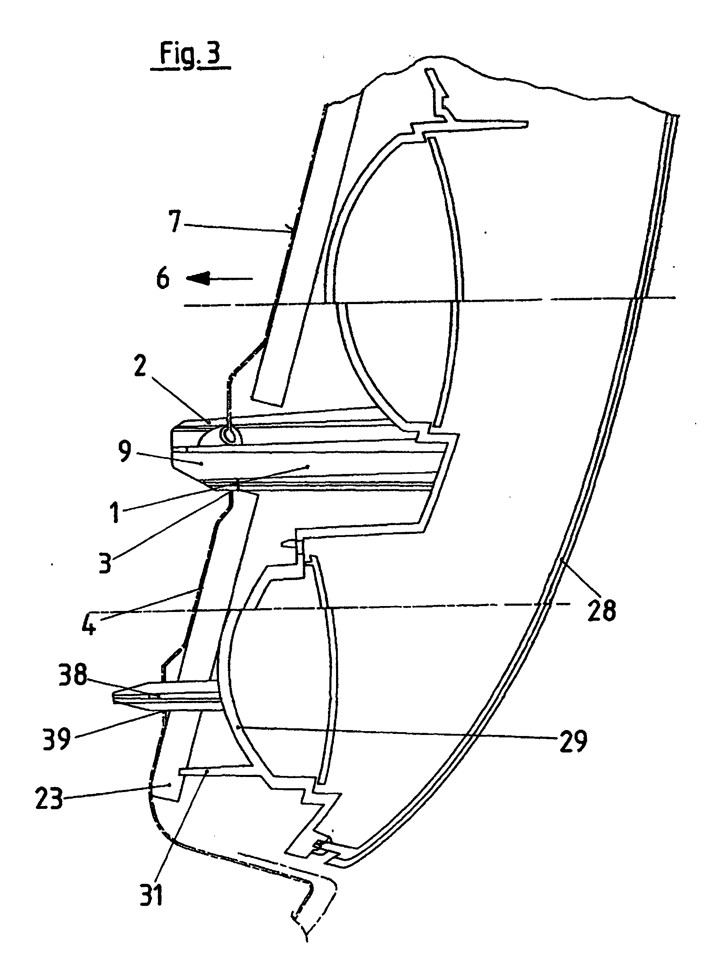

Die Figuren 1, 2 und 3 zeigen eine Heckleuchte für Fahrzeuge, mit einem aus Kunstsstoff bestehenden Gehäuse (27), dessen Vorderseite durch eine lichtdurchlässige Abschlußscheibe (28) dicht abgeschlossen ist. Die Rückseite des Gehäuses (27) bildet selbst mehrere Reflektoren (29), die in ihrem Scheitelbereich mehrere Öffnungen (30) zur Aufnahme von nicht dargestellten Lampen dienen. Die Reflektoren sind von einem an die Rückseite der Leuchte angeformten Kragen (31) umgeben. Der Kragen (31) liegt unter Zwischenschaltung eines Federelements (23), welches eine Dichtung ist, an einem umlaufenden Rand einer Öffnung des Fahrzeugs (4) an. Durch die Öffnung des Fahrzeugs (4) hindurch ist ein Wechsel der Lampen der Leuchte möglich.

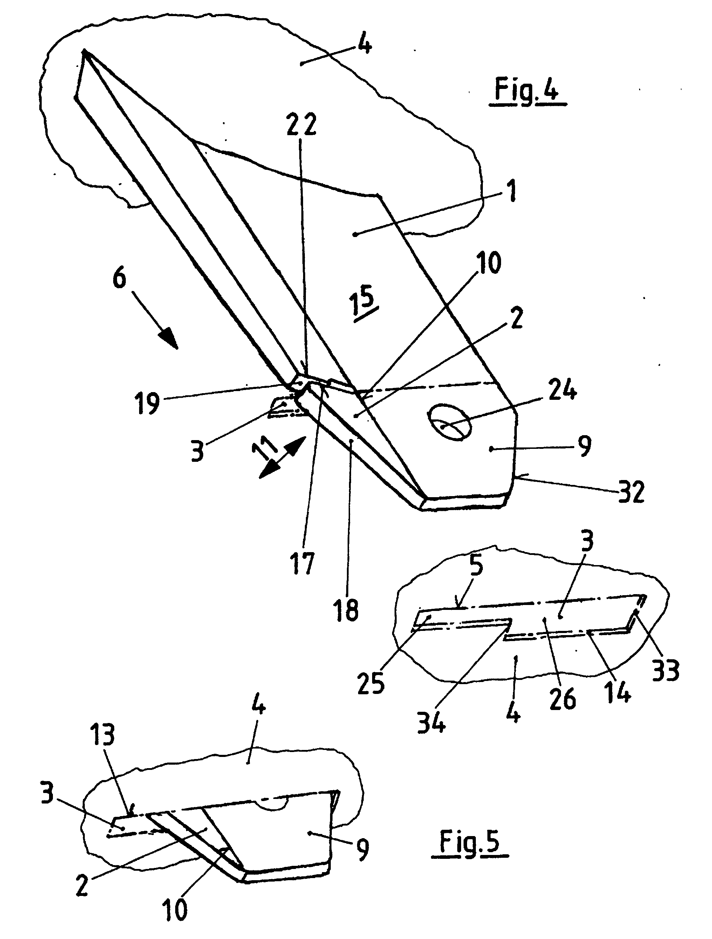

An die Rückseite des Gehäuses (27) sind innerhalb des umlaufenden Kragens (31) drei armförmige Befestigungsansätze (1) angeformt, welche aus dem Kragen (31) herausragen. Die armförmige Befestigungsansätze (1) sind von einer hochkant stehenden Wand gebildet, welche in Flächen (13) verlaufen, die sich schneiden und einen dreieckförmigen Zylinder bilden. Die Flächen (13) verlaufen nahe dem Umfangsrand der Leuchte und nahehalb des dreieckförmigen Zylinders liegt der Schwerpunkt der Leuchte. Die Befestigungsansätze (1) sind zusammen mit einem freien Endabschnitt (9) starr ausgeführt und sind mit dem Endabschnitt (9) durch eine Befestigungsöffnung (3) eines Fahrzeugs (4) hindurchführbar. An dem starren Endabschnitt (9) ist seitlich ein federndes Rastelement (2) angeformt, welches um eine in Steckrichtung (6) des Befestigungsansatzes (1) verlaufende Linie (10) in einem elastisch nachgiebigen Bereich bewegbar ist. Das Rastelement (2) kann auch um mehrere Linien (10), die von einem elastischen Abschnitt des Befestigungsansatzes gebildet sind, bewegbar sein. Das Rastelement (2) verläuft mit seiner Hauptausdehnung in einem spitzen Winkel (a) zur Hauptausdehnung des Endabschnitts (9) des Befestigungsansatzes (1). Das Rastelement (2) weist entgegen der Steckrichtung (6) einen rechtwinklig zur Steckrichtung (6) verlaufenden ersten Randabschnitt (17) auf, welcher selbstrastend den ersten Randbereich (5) der Befestigungsöffnung (3) hintergreift. Das Rastelement (2) ist in seiner Federrichtung (11) gesehen dreieckförmig gestaltet, wobei die Seiten des Dreiecks von der Linie (10), dem ersten Randabschnitt (17) und einem zweiten Randabschnitt (18) gebildet sind. Der zweite Randabschnitt (18) und ein schräg verlaufender vierter Randabschnitt (32) des Endabschnitts (9) verjüngen den Befestigungsansatz (1) zu seinem freien Ende hin. Der zweite und vierte Randabschnitt (18, 32) dienen als Auflaufschräge, durch welche der Befestigungsansatz (1) leicht in die Befestigungsöffnung (3) des Fahrzeugs (4) einfädelbar ist. Der erste Randabschnitt (17) des federnden Rastelement (2) und ein dritter Randabschnitt (22) des Befestigungsansatzes (1) begrenzen einen in dem Befestigungsansatz (1) eingebrachten Schlitz (19), in welchen der Randbereich (5) der Befestigungsöffnung (3) bei verrastetem Befestigungsansatz (1) eingreift. In den Befestigungsansatz (1) ist eine augenförmige Öffnung (20) eingebracht, welche zum Schlitz (19) hin geöffnet ist. Die Befestigungsöffnung (3) des Fahrzeugs (4) ist rechteckförmig gestaltet und weist auf der dem Randbereich (5) gegenüberliegenden Seite den Randbereich (14) auf, an dem der Befestigungsansatz (1) in seiner verrasteten Stellung mit zwei Abstützflächen (12) angrenzend verläuft. Die Abstützflächen (12) sind von Versteifungsrippen (16) gebildet, welche in Steckrichtung (6) des Befestigungsansatzes (1) verlaufen. Beim Einstecken des Befestigungsansatzes (1) in die Befestigungsöffnung (3) des Fahrzeugs (4) gleitet der Befestigungsansatz (1) mit seinen Abstützflächen (12) an dem zweiten Randbereich (14) der Befestigungsöffnung (3) entlang. Dabei gleitet ebenfalls das Rastelement (2) mit seinem zweiten Randabschnitt (18) an dem ersten Randbereich der Befestigungsöffnung (3) entlang und das Rastelement (2) wird in das Innere der Befestigungsöffnung (3) gedrückt, bis das Rastelement (2) nach außen auffedert und selbsttätig den ersten Randbereich der Befestigungsöffnung (3) hintergreift. In dieser Stellung ist der Randbereich (5) der Befestigungsöffnung (3) in dem Schlitz (19) des Befestigungsansatzes (1) in Steckrichtung (6) gehaltert. Die die Abstützflächen (12) aufweisenden Versteifungsrippen (16), welche sich bis zu dem freien Ende des Befestigungsansatzes (1) erstrecken, greifen in einen breiter ausgeführten Bereich (26) der Befestigungsöffnung (3) ein und grenzen mit sich abgewandten Seiten an einen dritten und vierten Randbereich (33 bzw. 34) der Befestigungsöffnung (3) an. Dadurch ist der Befestigungsansatz (1) quer zur Feder-(11) und Steckrichtung (6) in der Befestingungsöffnung (3) arretierbar. Der an dem Bereich (26) angrenzende Bereich (25) der Befestigungsöffnung (3), durch welchen das Rastelement (2) hindurchführbar ist, ist schmaler ausgeführt als der Bereich (26). Der Befestigungsansatz (1) grenzt mit der Seite, welche den Abstützflächen (12) abgewandt ist, an den ersten Randbereich (5) der Befestigungsöffnung (3) an. Der starre Endabschnitt (9) weist eine Hinterschneidung (24) auf, welche von einem in den Endabschnitt (9) eingebrachten Loch gebildet ist. Dadurch kann der Befestigungsansatz (1) mittels eines nicht dargestellten Hilfswerkzeuges, welches in die Hinterschneidung (24) eingreift, mit einer großen Kraft, welche der Kraft des Federelements (23) entgegenwirkt, soweit in Steckrichtung (6) gezogen werden, bis er den Randbereich (5) der Befestigungsöffnung (3) selbsttätig hintergreift. Die vorstehend beschriebenen Befestigungsansätze (1) und Befestigungsöffnungen (3) des Fahrzeugs (4) zeigen die Figuren 4 bis 6.

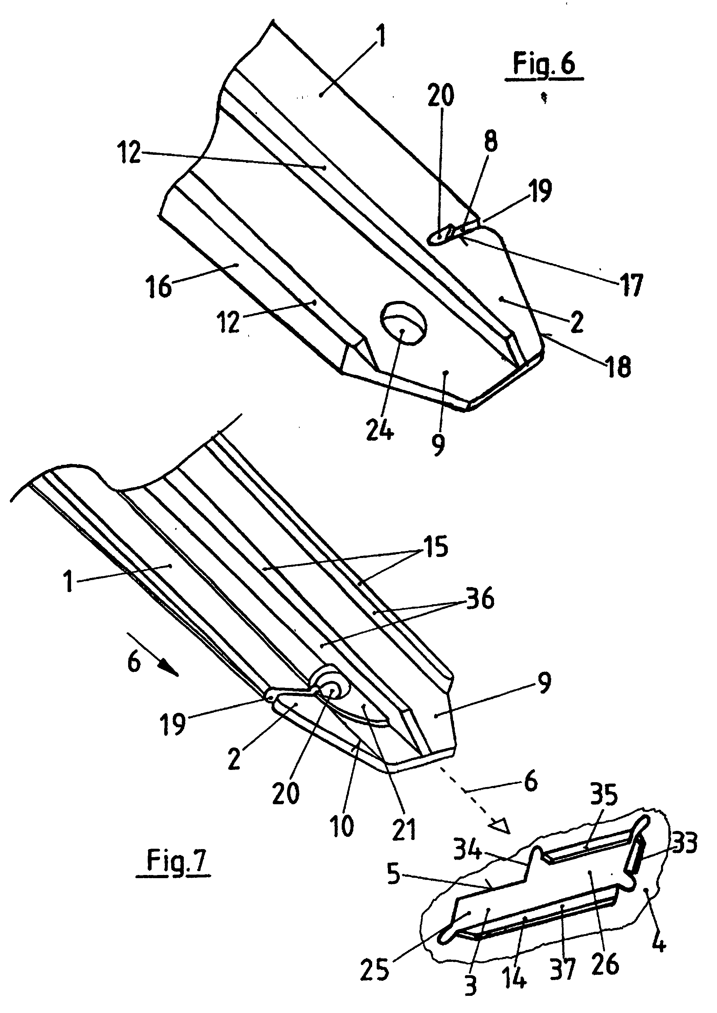

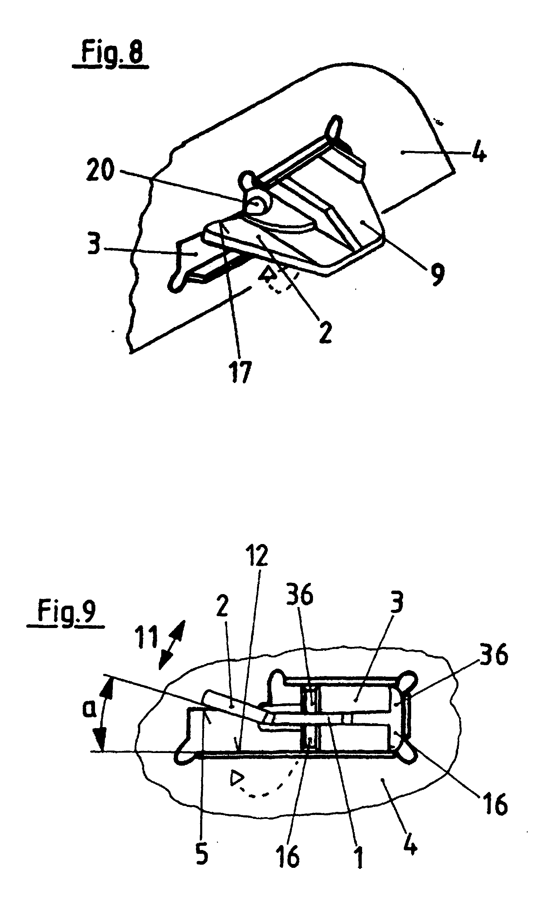

Der Befestigungsansatz (1) und die Befestigungsöffnung (3), welche in den Figuren 7 bis 9 dargestellt sind, weisen gegenüber dem in den Figuren 4 bis 6 dargestellten Befestigungsansatz (1) und der Befestigungsöffnung (3) folgende Unterschiede auf. Die augenförmige Öffnung (20) ist kreisrund ausgeführt und in den starren Teil des Befestigungsansatzes (1) eingebracht. Die augenförmige Öffnung ist von einem Abschnitt (21) umgeben, in welchem der Befestigungsansatz (1) in seiner Wandstärke dicker ausgeführt ist. Die Abstützfläche (15) des Befestigungsansatzes (1), welcher dem Randbereich (14) der Befestigungsöffnung (3) abgewandt ist, grenzt an einen fünften Randbereich (35) der Befestigungsöffnung (3) an. Als Abstützflächen (15) dienen Stirnflächen von Versteifungsrippen (36), welche in Steckrichtung (6) verlaufen. Der schmal ausgeführte Bereich (25) der Befestigungsöffnung (3) ist durch ein nach innen verspringenden Abschnitt des Fahrzeugs (4) gebildet und weist den ersten Randbereich (5) auf, welchen das Rastelement (2) selbsttätig hintergreift. Der zweite, dritte und fünfte Randbereich (14, 33, 35) weist einen in Steckrichtung (6) abgewinkelten Rand (37) auf.

An die Rückseite der Leuchte sind zwei in Steckrichtung (6) weisende fingerartige Halteansätze (38) angeformt, welche sich zu ihrem freien Ende hin konisch verjüngen. Die Halteansätze (38) greifen in Halteöffnungen (39) des Fahrzeugs (4) ein und sind in den Halteöffnungen (39) radial zur Steckrichtung (6) arretiert. Die Halteansätze (38) liegen nur partiell an dem Rand der Halteöffnungen (39) des Fahrzeugs (4) an, damit sie mit kleiner Kraft in die Halteöffnungen (39) einsteckbar sind. Zudem können die Halteansätze (38) so lang ausgeführt sein, daß sie die Leuchte gegenüber dem Fahrzeug (4) fixieren, bevor die Befestigungsansätze (1) ind die Befestigungsöffnung (3) des Fahrzeugs (4) eingreifen. Bei einer großen Leuchte können auch mehr als zwei Halteansätze (38) angeformt sein, um einen Teil der im Fahrbetrieb auftretenden vertikalen großen Kräfte aufzunehmen.

### Bezugszeichenliste

### Befestigungseinrichtung einer Leuchte für Fahrzeuge

- 1: Befestigungsansatz
- 2: Rastelement
- 3: Befestigungsöffnung
- 4: Fahrzeug
- 5: erster Randbereich
- 6: Steckrichtung
- 7: Anlagefläche
- 8: Anlagefläche
- 9: Endabschnitt
- 10: Linie
- 11: Federrichtung
- 12: Abstützfläche
- 13: Flächen
- 14: zweiter Randbereich
- 15: Abstützfläche
- 16: Versteifungsrippe
- 17: erster Randabschnitt
- 18: zweiter Randabschnitt
- 19: Schlitz
- 20: Öffung
- 21: Abschnitt
- 22: dritter Randabschnitt
- 23: Federelement
- 24: Hinterschneidung
- 25: Bereich
- 26: Bereich
- 27: Gehäuse
- 28: Abschlußscheibe
- 29: Reflektor
- 30: Öffnungen
- 31: Kragen
- 32: vierter Randabschnitt
- 33: dritter Randbereich
- 34: vierter Randbereich
- 35: fünfter Randbereich
- 36: Versteifungsrippen
- 37: Rand
- 38: Halteansätze
- 39: Halteöffnungen

## Patentansprüche

1. Leuchde mit einer Befestigungseinrichtung für Fahrzeuge, insbesondere Heckleuchte für Fahrzeuge, mit mindestens einem an der Rückseite der Leuchte angebrachten Befestigungsansatz (1), welcher an seinem freien Ende ein Rastelement (2) aufweist, das mindestens um eine Linie (10) in einem elastisch nachgiebigen Bereich bewegbar ist und mit dem der Befestigungsansatz (1) in eine Befestigungsöffnung (3) des Fahrzeugs (4) einsteckbar und an einem Randbereich (5) der Befestigungsöffnung (3) selbstrastend festsetzbar ist, und mit mindestens einer in Steckrichtung (6) des Befestigungsansatzes (1) gerichteten und an dem Fahrzeug (4) anlegbaren Anlagefläche (7) der Leuchte, wobei das Rastelement (2) an einem durch die Befestigungsöffnung (3) des Fahrzeugs (4) hindurchsteckbaren Endabschnitt (9) des Befestigungsansatzes (1) angeformt ist **dadurch gekennzeichnet, daß** die mindestens eine Linie (10), um die das Rastelement (2) gegenüber dem Endabschnitt (9) des Befestigungsansatzes (1) in einem elastich nachgiebigen Bereich bewegbar ist, in Steckrichtung (6) des Befestigungsansatzes (1) verläuft.

2. Leuchte nach Anspruch 1, **dadurch gekennzeichnet, daß** der Befestigungsansatz (1) zusammen mit seinem durch die Befestigungsöffnung (3) des Fahrzeugs (4) hindurchsteckbaren Endabschnitt (9) starr ausgeführt ist.

3. Leuchte nach Anspruch 1 oder 2, **dadurch gekennzeichnet, daß** der Befestigungsansatz (1) mindestens eine in Federrichtung (11) des Rastelements (2) gerichtete Abstützfläche (12) aufweist, mit welcher der Befestigungsansatz (1) bis zum selbsttätigen Eingreifen in den ersten Randbereich (5) der Befestigungsöffnung (3) an einem dem ersten Randbereich (5) zugewandten zweiten Randbereich (14) der Befestigungsöffnung (3) entlanggleitet.

4. Leuchte nach einem der Ansprüche 1 bis 3, **dadurch gekennzeichnet, daß** das Rastelement (2) mit seiner Hauptausdehnung in einem spitzen Winkel (a) zur Abstützfläche (12) des Befestigungsansatzes (1) verläuft.

5. Leuchte nach einem der Ansprüche 1 bis 4, **dadurch gekennzeichnet, daß** der Befestigungsansatz (1) auf sich abgewandten Seiten mindestens jeweils eine in Federrichtung (11) des Rastelements (2) gerichtete Abstützfläche (12 bzw. 15) aufweist.

6. Leuchte nach einem der Ansprüche 3 bis 5, **dadurch gekennzeichnet, daß** mindestens eine Abstützfläche (12 bzw. 15) von einer Stirnfläche einer in Steckrichtung (6) des Befestigungsansatzes (1) verlaufenden Versteifungsrippe (16) gebildet ist.

7. Leuchte nach einem der Ansprüche 1 bis 6, **dadurch gekennzeichnet, daß** das federnde Rastelement (2) von einem Wandabschnitt gebildet ist, welcher einen in und entgegen der Steckrichtung (6) verlaufenden Randabschnitt (17, 18) aufweist, von denen der entgegen der Steckrichtung (6) gerichteten erste Randabschnitt (17) die Befestigungsöffnung (3) selbsttätig hintergreift und der in Steckrichtung (6) gerichtete zweite Randabschnitt (18) als Auflaufschräge dient, mit welcher das Rastelement (2) beim Einstecken des Befestigungsansatzes (1) an einem ersten Randbereich (13) der Befestigungsöffnung (3) entlanggleitet, bis das Rastelement (2) den ersten Randbereich (5) der Befestigungsöffnung (3) selbsttätig hintergreift.

8. Leuchte nach einem der Ansprüche 1 bis 7, **dadurch gekennzeichnet, daß** ein entgegen der Steckrichtung (6) gerichteter Randabschnitt (17) des Rastelements (2) einen in den Befestigungsansatz (1) eingebrachten Schlitz (19) begrenzt, welcher quer zur Steckrichtung (6) verläuft.

9. Leuchte nach Anspruch 8, **dadurch gekennzeichnet, daß** in den Befestigungsansatz (1) eine augenförmige Öffnung (20) eingebracht ist, welche an das federnde Rastelement (2) angrenzt und zum Schlitz (19) hin geöffnet ist.

10. Leuchte nach Anspruch 9, **dadurch gekennzeichnet, daß** der Befestigungsansatz (1) in einem um die augenförmige Öffnung (20) herum verlaufenden Abschnitt (21) in seiner Wandstärke dicker ausgeführt ist.

11. Leuchte nach einem der Ansprüche 7 bis 10, **dadurch gekennzeichnet, daß** die an das Fahrzeug (4) anlegbare Anlagefläche (7 ) der Leuchte von einem an die Rückseite der Leuchte angebrachten Federelement (23) gebildet ist, durch welches der entgegen der Steckrichtung (6) gerichtete erste Randabschnitt (17) des Rastelements (2) gegen den selbsttätig hintergriffenen ersten Randbereich (5) der Befestigungsöffnung (3) gedrückt ist.

12. Leuchte nach einem der Ansprüche 1 bis 11, **dadurch gekennzeichnet, daß** in den durch die Befestigungsöffnung (3) hindurchführbaren Endabschnitt (9) mindestens eine Hinterschneidung (24) eingebracht ist, welche zum Eingriff eines Hilfswerkzeuges dient, durch das der Befestigungsansatz (1) entgegen der Federkraft des Federelements (23) in eine mit der Befestigungsöffnung (3) verrastete Endstellung bringbar ist.

13. Leuchte nach einem der Ansprüche 3 bis 12, **dadurch gekennzeichnet, daß** die Abstützflächen (12) von mindestens zwei Befestigungsansätzen (1) in sich schneidenden Flächen (13) liegen.

14. Leuchte nach einem der Ansprüche 1 bis 13, **dadurch gekennzeichnet, daß** die Befestigungsöffnung (3) in dem Fahrzeug rechteckförmig gestaltet ist und ein Bereich (26) der rechteckförmigen Befestigungsöffnung (3), in welcher der die Abstützflächen (12) aufweisende Endabschnitt (9) des Befestigungsansatzes (1) einsteckbar ist, breiter ausgeführt ist, als der Bereich (25), durch den das federnde Rastelement (2) hindurchführbar ist.

15. Leuchte nach einem der Ansprüche 1 bis 14, **dadurch gekennzeichnet, daß** an dem durch die Befestigungsöffnung (3) des Fahrzeugs (4) hindurchsteckbaren Endabschnitt (9) des Befestigungsansatzes (1) mindestens zwei der federnden Rastelemente (2) angeformt sind.

## Claims

1. A lamp with a fixing arrangement for vehicles, in particular a rear lamp for vehicles, with at least one fixing projection (1) attached to the rear of the lamp, which fixing projection (1) has at its free end a locking element (2) which is movable within an elastically resilient range at least about a line (10) and is insertable with the fixing projection (1) into a fixing aperture (3) of the vehicle (4) and is self-lockingly fixable to an edge section (5) of the fixing aperture (3), and with at least one abutment face (7) of the lamp oriented in the direction of insertion (6) of the fixing projection (1) and able to abut against the vehicle (4), the locking element (2) being moulded on to an end portion (9) of the fixing projection (1) which is insertable through the fixing aperture (3) of the vehicle (4), **characterised in that** the at least one line (10) about which the locking element (2) is movable within an elastically resilient range with respect to the end portion (9) of the fixing projection (1) extends in the direction of insertion (6) of the fixing projection (1).

2. A lamp according to Claim 1, **characterised in that** the fixing projection (1) together with its end portion (9), which is insertable through the fixing aperture (3) of the vehicle (4), has a rigid configuration.

3. A lamp according to Claim 1 or 2, **characterised in that** the fixing projection (1) has at least one support face (12) oriented in the direction of resilient displacement (11) of the locking element (2), with which support face (12) the fixing projection (1) slides along a second edge section (14) of the fixing aperture (3) facing towards the first edge section (5) until said fixing projection (1) automatically engages in the first edge section (5) of the fixing aperture (3).

4. A lamp according to one of the claims 1 to 3, **characterised in that** the locking element (2) extends with its main extension at an acute angle (a) to the support face (12) of the fixing projection (1).

5. A lamp according to one of the claims 1 to 4, **characterised in that** the fixing projection (1) has on each of its respective opposite sides at least one support face (12, 15) oriented in the direction of resilient displacement (11) of the locking element (2).

6. A lamp according to one of the claims 3 to 5, **characterised in that** at least one support face (12, 15) is formed by an edge face of a stiffening rib (16) running in the direction of insertion (6) of the fixing projection (1).

7. A lamp according to one of the claims 1 to 6, **characterised in that** the resilient locking element (2) is formed by a wall portion which has edge portions (17, 18) extending in and against the direction of insertion (6), of which edge portions (17, 18) the first edge portion (17) oriented against the direction of insertion (6) automatically engages behind the fixing aperture (3) and the second edge portion (18) oriented in the direction of insertion (6) serves as an inclined ramp with which the locking element (2) slides along a first edge section (13) of the fixing aperture (3) as the fixing projection (1) is inserted, until the locking element (2) automatically engages behind the first edge section (5) of the fixing aperture (3).

8. A lamp according to one of the claims 1 to 7, **characterised in that** an edge portion (17) of the locking element (2) oriented against the direction of insertion (6) delimits a slot (19) formed in the fixing projection (1) and running transversely to the direction of insertion (6).

9. A lamp according to Claim 8, **characterised in that** an eye-shaped aperture (20) which is adjacent to the resilient locking element (2) and is open towards the slot (19) is formed in the fixing projection (1).

10. A lamp according to Claim 9, **characterised in that** the fixing projection (1) has a wall thickness which is increased in a portion (21) surrounding the eye-shaped aperture (20).

11. A lamp according to one of the claims 7 to 10, **characterised in that** the abutment face (7) of the lamp which can abut against the vehicle (4) is formed by a spring element (23) attached to the rear of the lamp, by which spring element (23) the first edge portion (17) of the locking element (2) oriented against the direction of insertion (6) is pressed against the first edge section (5) of the fixing aperture (3) behind which said first edge portion (17) automatically engages.

12. A lamp according to one of the claims 1 to 11, **characterised in that** at least one undercut (24) is formed in the end portion (9) which is insertable through the fixing aperture (3), which undercut (24) serves to engage with an auxiliary tool by which the fixing projection (1) is movable into an end position where it is latched to the fixing aperture (3) against the elastic force of the spring element (23).

13. A lamp according to one of the claims 3 to 12, **characterised in that** the support faces (12) of at least two fixing projections (1) are disposed in intersecting planes (13).

14. A lamp according to one of the claims 1 to 13, **characterised in that** the fixing aperture (3) in the vehicle has a rectangular configuration and an area (26) of the rectangular fixing aperture (3) in which the end portion (9) of the fixing projection (1) having the support faces (12) is insertable has a wider configuration than the area (25) through which the resilient locking element (2) is insertable.

15. A lamp according to one of the claims 1 to 14, **characterised in that** at least two of the resilient locking elements (2) are moulded on to the end portion (9) of the fixing projection (1) which is insertable through the fixing aperture (3) of the vehicle (4).

## Revendications

1. Feu avec un dispositif de fixation pour véhicules, en particulier feu arrière pour véhicules, comportant au moins un talon de fixation (1) ménagé sur la face postérieure du feu, qui présente à son extrémité libre un élément d'enclenchement (2) qui est déplaçable dans une zone élastiquement flexible au moins autour d'une ligne (10) et avec lequel le talon de fixation (1) peut être enfiché dans une ouverture de fixation (3) du véhicule (4) et peut être immobilisé par autoenclenchement sur une zone de bord (5) de l'ouverture de fixation (3), et comportant au moins une surface d'appui (7) du feu orientée en direction d'enfichage (6) du talon de fixation (1) et susceptible d'être mise en appui sur le véhicule (4), l'élément d'enclenchement (2) étant moulé sur un tronçon d'extrémité (9), enfichable à travers l'ouverture de fixation (3) du véhicule (4), du talon de fixation (1), **caractérisé en ce que** ladite au moins une ligne (10) autour de laquelle l'élément d'enclenchement (2) est déplaçable dans une zone élastiquement flexible par rapport au tronçon d'extrémité (9) du talon de fixation (1) s'étend en direction d'enfichage (6) du talon de fixation (1).

2. Feu selon la revendication 1, **caractérisé en ce que** le talon de fixation (1) est réalisé rigide conjointement avec son tronçon d'extrémité (9) enfichable à travers l'ouverture de fixation (3) du véhicule (4).

3. Feu selon l'une ou l'autre des revendications 1 et 2, **caractérisé en ce que** le talon de fixation (1) présente au moins une surface de soutien (12) orientée en direction d'élasticité (11) de l'élément d'enclenchement (2), avec laquelle le talon de fixation (1) glisse sur une deuxième zone de bord (14) de l'ouverture de fixation (3), tournée vers la première zone de bord (5) jusqu'à venir s'engager automatiquement dans la première zone de bord (5) de l'ouverture de fixation (3).

4. Feu selon l'une des revendications 1 à 3, **caractérisé en ce que** l'élément d'enclenchement (2) s'étend avec son extension principale sous un angle aigu (a) par rapport à la surface de soutien (12) du talon de fixation (1).

5. Feu selon l'une des revendications 1 à 4, **caractérisé en ce que** le talon de fixation (1) présente sur des côtés détournés l'un de l'autre au moins une surface de soutien respective (12, 15) orientée en direction d'élasticité (11) de l'élément d'enclenchement (2).

6. Feu selon l'une des revendications 3 à 5, **caractérisé en ce qu'**au moins une surface de soutien respective (12, 15) est formée par une surface frontale d'une nervure de renforcement (16) s'étendant en direction d'enfichage (6) du talon de fixation (1).

7. Feu selon l'une des revendications 1 à 6, **caractérisé en ce que** l'élément d'enclenchement (2) élastique est formé par un tronçon de paroi qui présente un tronçon de bord (18) s'étendant dans la direction d'enfichage et un tronçon de bord (17) s'étendant à l'opposé de la direction d'enfichage (6), dont le premier tronçon de bord (17) orienté à l'opposé de la direction d'enfichage (6) saisit automatiquement par l'arrière l'ouverture de fixation (3) et le deuxième tronçon de bord (18) orienté en direction d'enfichage (6) sert de pente d'accès avec laquelle l'élément d'enclenchement (2) glisse le long d'une première zone de bord (13) de l'ouverture de fixation (3) lors de l'enfichage du talon de fixation (1) jusqu'à ce que l'élément d'enclenchement (2) saisisse automatiquement par l'arrière la première zone de bord (5) de l'ouverture de fixation (3).

8. Feu selon l'une des revendications 1 à 7, **caractérisé en ce qu'**un tronçon de bord (17), dirigé à l'opposé de la direction d'enfichage (6), de l'élément d'enclenchement (2), délimite une fente (19) ménagée dans le talon de fixation (1), laquelle s'étend perpendiculairement à la direction d'enfichage (6).

9. Feu selon la revendication 8, **caractérisé en ce que** dans le talon de fixation (1) est ménagée une ouverture (20) en forme d'oeillet qui est adjacente à l'élément d'enclenchement (2) élastique et qui est ouverte vers la fente (19).

10. Feu selon la revendication 9, **caractérisé en ce que** le talon de fixation (1) est réalisé avec une paroi plus épaisse dans un tronçon (21) s'étendant autour de l'ouverture (20) en forme d'oeillet.

11. Feu selon l'une des revendications 7 à 10, **caractérisé en ce que** la surface d'appui (7) du feu qui peut être appliquée contre le véhicule (4) est formée par un élément ressort (23) monté sur la face postérieure du feu, par lequel le premier tronçon de bord (17), orienté à l'opposé de la direction d'enfichage (6), de l'élément d'enclenchement (2), est pressé contre la première zone de bord (5) automatiquement saisie par l'arrière, de l'ouverture de fixation (3).

12. Feu selon l'une des revendications 1 à 11, **caractérisé en ce que** dans le tronçon d'extrémité (9) que l'on peut faire passer à travers l'ouverture de fixation (3) est ménagée au moins une contre-dépouille (24) qui sert à l'engagement d'un outil auxiliaire par lequel le talon de fixation (1) peut être amené à l'encontre de la force élastique de l'élément ressort (23) jusque dans une position finale enclenchée avec l'ouverture de fixation (3).

13. Feu selon l'une des revendications 3 à 12, **caractérisé en ce que** les surfaces de soutien (12) d'au moins deux talons de fixation (1) sont situées dans des surfaces (13) qui se recoupent.

14. Feu selon l'une des revendications 1 à 13, **caractérisé en ce que** l'ouverture de fixation (3) dans le véhicule est réalisée rectangulaire, et une région (26) de l'ouverture de fixation (3) rectangulaire, dans laquelle on peut enficher le tronçon d'extrémité (9) du talon de fixation (1) présentant la surface de soutien (12), est réalisée plus large que la région (25) à travers laquelle on peut faire passer l'élément d'enclenchement (2) élastique.

15. Feu selon l'une des revendications 1 à 14, **caractérisé en ce qu'**au moins deux des éléments d'enclenchement (2) élastiques sont moulés sur le tronçon d'extrémité (9) du talon de fixation (1), que l'on peut enficher à travers l'ouverture de fixation (3) du véhicule (4).
